# EUROPEAN PATENT APPLICATION

(11) **EP 3 557 393 A1**
(43) Date of publication of application: **23.10.2019**
(21) Application number: 19158721.1
(22) Date of filing: 07.01.2015
(51) Int. Cl.: G06F 3/048

(54) **INTERFACE OPERATION METHOD AND TERMINAL**

(30) Priority: 16.01.2014 CN 201410020478; 27.08.2014 CN 201410428739
(62) Divisional of application: 15736987.7
(71) Applicant: Huawei Device Co., Ltd., Dongguan, Guangdong 523808 (CN)
(72) Inventor: YANG, Zhiyan, SHENZHEN, Guangdong 518129 (CN); WANG, Hongjun, SHENZHEN, Guangdong 518129 (CN)
(74) Representative: Körber, Martin Hans

(57) **Abstract**

An interface operation method and a terminal are provided, where the method includes: detecting whether a touchscreen of a terminal is in an inclined state by using a gravity sensor or a gyroscope in the terminal, where the being in an inclined state includes having an inclined angle in a preset range in a preset direction, or having acceleration or displacement in a preset range in a preset direction; moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state, where the second interface is an interface obtained according to the movement of the part or all of the first interface; and the moving, based on a predefined rule according to the inclined state of the touchscreen, a part or all of a first interface that is currently displayed to a user and is on a screen of the touchscreen includes: interchanging display positions of partial operable interface content on the first interface based on the predefined rule according to the inclined state of the touchscreen; and receiving an operation performed by the user on the second interface, and after the user completes the operation on the second interface, restoring the moved part or all of the first interface to a position prior to the movement.

## Description

### TECHNICAL FIELD

The present invention relates to the terminal field, and in particular, to an interface operation method and a terminal.

### BACKGROUND

Currently, a size of an interface displayed on a screen of a mobile touchscreen device increases along with a size of the screen. When a user holds a mobile phone with a single hand or holds a tablet device (such as an iPAD) with both hands, it is generally difficult for a finger to reach, on one interface, operable interface content beyond a movement range of a holding hand. Currently, the operable interface content can be arranged, if possible, at a lower part of the interface during interface design, so as to reduce a possibility that operable interface content at an upper part of the interface cannot be reached. However, a case in which partial operable interface content is located beyond the movement range of the holding hand still exists, and consequently, the user cannot conveniently and efficiently operate the partial operable interface content.

### SUMMARY

Embodiments of the present invention provide an interface operation method and a terminal, which may make it convenient for a user to perform, in a case in which a screen of a terminal is relative large, an operation on operable interface content that is on the screen and originally beyond a movement range of a holding hand.

According to an aspect, an embodiment of the present invention provides an interface operation method, where the method includes:
detecting whether a touchscreen of a terminal is in an inclined state by using a gravity sensor or a gyroscope in the terminal, where the being in an inclined state includes having an inclined angle in a preset range in a preset direction, or having acceleration or displacement in a preset range in a preset direction;
moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state, where the second interface is an interface obtained according to the movement of the part or all of the first interface, and the moving, based on a predefined rule according to the inclined state of the touchscreen, a part or all of a first interface that is currently displayed to a user and is on a screen of the touchscreen includes: interchanging display positions of partial operable interface content on the first interface based on the predefined rule according to the inclined state of the touchscreen; and
receiving an operation performed by the user on the second interface, and after the user completes the operation on the second interface, restoring the moved part or all of the first interface to a position prior to the movement;
where the part of the first interface is a part or all of operable interface content on the first interface, where the operable interface content includes at least one of an icon, a button, or a user selection button.

With reference to the first aspect, in a first implementation manner of the first aspect, the second interface is specifically an interface obtained after the part or all of the first interface is moved.

With reference to the first aspect or the first implementation manner of the first aspect, in a second implementation manner of the first aspect, the inclined state of the touchscreen is inclined leftward, inclined rightward, inclined upward, inclined downward, inclined upward-leftward, inclined downward-leftward, inclined upward-rightward, or inclined downward-rightward.

According to a second aspect, an embodiment of the present invention provides an interface operation method, where the method includes:
detecting whether a touchscreen of a terminal is in an inclined state by using a gravity sensor or a gyroscope in the terminal, where the being in an inclined state includes having an inclined angle in a preset range in a preset direction, or having acceleration or displacement in a preset range in a preset direction;
moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state, where the second interface is an interface obtained according to the movement of the part or all of the first interface, and the moving, based on a predefined rule according to the inclined state of the touchscreen, a part or all of a first interface that is currently displayed to a user and is on a screen of the touchscreen includes: when the inclined state of the touchscreen is inclined upward/downward/leftward/rightward, calculating, based on a predefined formula, a distance by which the part or all of the first interface on the screen should be moved upward/downward/leftward/rightward, and moving the part or all of the first interface upward/downward/leftward/rightward based on the distance obtained by calculation; and
receiving an operation performed by the user on the second interface, and after the user completes the operation on the second interface, restoring the moved part or all of the first interface to a position prior to the movement;
where the part of the first interface is a part or all of operable interface content on the first interface, where the operable interface content includes at least one of an icon, a button, or a user selection button.

With reference to the second aspect, in a first implementation manner of the second aspect, the operable interface content on the first interface includes a virtual keyboard, and the moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state includes at least one of the following cases:
when it is detected that the inclined state of the touchscreen of the terminal is inclined leftward, shrinking the virtual keyboard according to the inclined state of the touchscreen, calculating, based on the predefined formula, a distance by which the virtual keyboard on the first interface on the screen is to be moved leftward, and moving the virtual keyboard leftward based on the distance obtained by calculation to obtain the second interface;
when it is detected that the inclined state of the touchscreen of the terminal is inclined rightward, shrinking the virtual keyboard according to the inclined state of the touchscreen, calculating, based on the predefined formula, a distance by which the virtual keyboard on the first interface on the screen is to be moved rightward, and moving the virtual keyboard rightward based on the distance obtained by calculation to obtain the second interface;
when it is detected that the inclined state of the touchscreen of the terminal is inclined upward, calculating, according to the inclined state of the touchscreen based on the predefined formula, a distance by which the virtual keyboard on the first interface on the screen is to be moved upward, and moving the virtual keyboard upward based on the distance obtained by calculation to obtain the second interface; or
when it is detected that the inclined state of the touchscreen of the terminal is inclined downward, calculating, according to the inclined state of the touchscreen based on the predefined formula, a distance by which the virtual keyboard on the first interface on the screen is to be moved downward, and moving the virtual keyboard downward based on the distance obtained by calculation to obtain the second interface.

With reference to the second aspect, in a second implementation manner of the second aspect, the operable interface content on the first interface includes an input window, and the moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state includes at least one of the following cases:
when it is detected that the inclined state of the touchscreen of the terminal is inclined leftward, calculating, according to the inclined state of the touchscreen based on the predefined formula, a distance by which the input window on the first interface on the screen is to be moved leftward, and moving the input window leftward based on the distance obtained by calculation to obtain the second interface;
when it is detected that the inclined state of the touchscreen of the terminal is inclined rightward, calculating, according to the inclined state of the touchscreen based on the predefined formula, a distance by which the input window on the first interface on the screen is to be moved rightward, and moving the input window rightward based on the distance obtained by calculation to obtain the second interface;
when it is detected that the inclined state of the touchscreen of the terminal is inclined upward, calculating, according to the inclined state of the touchscreen based on the predefined formula, a distance by which the input window on the first interface on the screen is to be moved upward, and moving the input window upward based on the distance obtained by calculation to obtain the second interface; or
when it is detected that the inclined state of the touchscreen of the terminal is inclined downward, calculating, according to the inclined state of the touchscreen based on the predefined formula, a distance by which the input window on the first interface on the screen is to be moved downward, and moving the input window downward based on the distance obtained of calculation to obtain the second interface.

With reference to the second aspect or either of the first implementation manner of the second aspect and the second implementation manner of the second aspect, in a third implementation manner of the second aspect, the second interface includes an interface obtained after the part or all of the first interface is moved, and a third interface presented by space vacated on the screen after the part or all of the first interface is moved; and
the receiving an operation performed by the user on the second interface includes at least one of the following:
receiving an operation performed by the user on an interface obtained after the part or all of the first interface is moved; or
receiving an operation performed by the user on the third interface; or
receiving an interactive operation performed by the user between an interface obtained after the part or all of the first interface is moved and the third interface.

With reference to the second aspect, the first implementation manner of the second aspect, the second implementation manner of the second aspect, or the third implementation manner of the second aspect, in a fourth implementation manner of the second aspect, the inclined state of the touchscreen is inclined leftward, inclined rightward, inclined upward, inclined downward, inclined upward-leftward, inclined downward-leftward, inclined upward-rightward, or inclined downward-rightward.

According to a third aspect, an embodiment of the present invention provides a terminal, where the terminal includes:
a touchscreen, configured to present an interface on a screen of the touchscreen;
a gravity sensor or a gyroscope, configured to detect whether the touchscreen is in an inclined state, where the being in an inclined state includes having an inclined angle in a preset range in a preset direction, or having acceleration or displacement in a preset range in a preset direction; and
a processor, configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state, where the second interface is an interface obtained according to the movement of the part or all of the first interface, and that the processor is configured to move, based on a predefined rule according to the inclined state of the touchscreen, a part or all of a first interface that is currently displayed to a user and is on a screen of the touchscreen is specifically that:
   the processor is configured to interchange display positions of partial operable interface content on the first interface based on the predefined rule according to the inclined state of the touchscreen; and
   the processor is further configured to receive an operation performed by the user on the second interface, and after the user completes the operation on the second interface, restore the moved part or all of the first interface to a position prior to the movement;
   where the part of the first interface is a part or all of operable interface content on the first interface, where the operable interface content includes at least one of an icon, a button, or a user selection button.

With reference to the third aspect, in a first implementation manner of the third aspect, the second interface is specifically an interface obtained after the part or all of the first interface is moved.

With reference to the third aspect or the first implementation manner of the third aspect, in a second implementation manner of the third aspect, the inclined state of the touchscreen is inclined leftward, inclined rightward, inclined upward, inclined downward, inclined upward-leftward, inclined downward-leftward, inclined upward-rightward, or inclined downward-rightward.

According to a fourth aspect, an embodiment of the present invention provides a terminal, where the terminal includes:
a touchscreen, configured to present an interface on a screen of the touchscreen;
a gravity sensor or a gyroscope, configured to detect whether the touchscreen is in an inclined state, where the being in an inclined state includes having an inclined angle in a preset range in a preset direction, or having acceleration or displacement in a preset range in a preset direction; and
a processor, configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state, where the second interface is an interface obtained according to the movement of the part or all of the first interface, and that the processor is configured to move, based on a predefined rule according to the inclined state of the touchscreen, a part or all of a first interface that is currently displayed to a user and is on a screen of the touchscreen is specifically that:
   the processor is configured to: when the inclined state of the touchscreen is inclined upward/downward/leftward/rightward, calculate, based on a predefined formula, a distance by which the part or all of the first interface on the screen should be moved upward/downward/leftward/rightward, and move the part or all of the first interface upward/downward/leftward/rightward based on the distance obtained by calculation; and
   the processor is further configured to receive an operation performed by the user on the second interface, and after the user completes the operation on the second interface, restore the moved part or all of the first interface to a position prior to the movement;
   where the part of the first interface is a part or all of operable interface content on the first interface, where the operable interface content includes at least one of an icon, a button, or a user selection button.

With reference to the fourth aspect, in a first implementation manner of the fourth aspect, the operable interface content on the first interface includes a virtual keyboard, and that the processor is configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state includes:
the processor is configured to: when the gravity sensor or the gyroscope detects that the inclined state of the touchscreen of the terminal is inclined leftward, shrink the virtual keyboard according to the inclined state of the touchscreen, calculate, based on the predefined formula, a distance by which the virtual keyboard on the first interface on the screen is to be moved leftward, and move the virtual keyboard leftward based on the distance obtained by calculation to obtain the second interface; or
the processor is configured to: when the gravity sensor or the gyroscope detects that the inclined state of the touchscreen of the terminal is inclined rightward, shrink the virtual keyboard according to the inclined state of the touchscreen, calculate, based on the predefined formula, a distance by which the virtual keyboard on the first interface on the screen is to be moved rightward, and move the virtual keyboard rightward based on the distance obtained by calculation to obtain the second interface; or
the processor is configured to: when the gravity sensor or the gyroscope detects that the inclined state of the touchscreen of the terminal is inclined upward, calculate, according to the inclined state of the touchscreen based on the predefined formula, a distance by which the virtual keyboard on the first interface on the screen is to be moved upward, and move the virtual keyboard upward based on the distance obtained by calculation to obtain the second interface; or
the processor is configured to: when the gravity sensor or the gyroscope detects that the inclined state of the touchscreen of the terminal is inclined downward, calculate, according to the inclined state of the touchscreen based on the predefined formula, a distance by which the virtual keyboard on the first interface on the screen is to be moved downward, and move the virtual keyboard downward based on the distance obtained by calculation to obtain the second interface.

With reference to the fourth aspect, in a second implementation manner of the fourth aspect, the operable interface content on the first interface includes an input window, and that the processor is configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state includes:
the processor is configured to: when the gravity sensor or the gyroscope detects that the inclined state of the touchscreen of the terminal is inclined leftward, calculate, according to the inclined state of the touchscreen based on the predefined formula, a distance by which the input window on the first interface on the screen is to be moved leftward, and move the input window leftward based on the distance obtained by calculation to obtain the second interface; or
the processor is configured to: when the gravity sensor or the gyroscope detects that the inclined state of the touchscreen of the terminal is inclined rightward, calculate, according to the inclined state of the touchscreen based on the predefined formula, a distance by which the input window on the first interface on the screen is to be moved rightward, and move the input window rightward based on the distance obtained by calculation to obtain the second interface; or
the processor is configured to: when the gravity sensor or the gyroscope detects that the inclined state of the touchscreen of the terminal is inclined upward, calculate, according to the inclined state of the touchscreen based on the predefined formula, a distance by which the input window on the first interface on the screen is to be moved upward, and move the input window upward based on the distance obtained by calculation to obtain the second interface; or
the processor is configured to: when the gravity sensor or the gyroscope detects that the inclined state of the touchscreen of the terminal is inclined downward, calculate, according to the inclined state of the touchscreen based on the predefined formula, a distance by which the input window on the first interface on the screen is to be moved downward, and move the input window downward based on the distance obtained of calculation to obtain the second interface.

With reference to the fourth aspect, the first implementation manner of the fourth aspect, or the second implementation manner of the fourth aspect, in a third implementation manner of the fourth aspect, the second interface includes an interface obtained after the part or all of the first interface is moved, and a third interface presented by space vacated on the screen after the part or all of the first interface is moved; and
that the processor is configured to receive an operation performed by the user on the second interface includes at least one of the following:
the processor is configured to receive an operation performed by the user on an interface obtained after the part or all of the first interface is moved; or
the processor is configured to receive an operation performed by the user on the third interface; or
the processor is configured to receive an interactive operation performed by the user between an interface obtained after the part or all of the first interface is moved and the third interface.

With reference to the fourth aspect, the first implementation manner of the fourth aspect, the second implementation manner of the fourth aspect, or the third implementation manner of the fourth aspect, in a fourth implementation manner of the fourth aspect, the inclined state of the touchscreen is inclined leftward, inclined rightward, inclined upward, inclined downward, inclined upward-leftward, inclined downward-leftward, inclined upward-rightward, or inclined downward-rightward.

Compared with the prior art, the embodiments of the present invention have the following advantageous effects:

According to a method and a terminal provided in the embodiments of the present invention, when a gravity sensor or a gyroscope in a terminal detects that a touchscreen of the terminal is in an inclined state, a position of an entire interface or a position of partial content on the interface is adjusted according to the inclined state of the touchscreen, so that a user can more conveniently perform an operation on operable interface content that is originally beyond a movement range of a holding hand. After the user completes the operation, an adjusted interface is restored to the interface prior to the adjustment, so that the user can continue to comfortably view the interface. Ease of viewing the interface by the user and convenience of performing an operation on the interface by the user are both considered, which improves user-friendliness of a terminal interface and user experience.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of an interface operation method according to an embodiment of the present invention;
FIG. 2 is a flowchart of another interface operation method according to an embodiment of the present invention;
FIG. 3 is a schematic diagram of detecting an inclined angle in an interface operation method according to an embodiment of the present invention;
FIG. 4 is a schematic structural diagram of a terminal according to an embodiment of the present invention;
FIG. 5 is a schematic diagram of an effect of an interface operation method according to an embodiment of the present invention;
FIG. 6 is a schematic diagram of an effect of another interface operation method according to an embodiment of the present invention;
FIG. 7 is a schematic diagram of an effect of still another interface operation method according to an embodiment of the present invention;
FIG. 8 is a schematic diagram of an effect of yet another interface operation method according to an embodiment of the present invention;
FIG. 9 is a schematic diagram of an effect of still yet another interface operation method according to an embodiment of the present invention;
FIG. 10 is a schematic diagram of an effect of a further interface operation method according to an embodiment of the present invention;
FIG. 11 is a schematic diagram of an effect of a still further interface operation method according to an embodiment of the present invention; and
FIG. 12 is a schematic diagram of an effect of a yet further interface operation method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

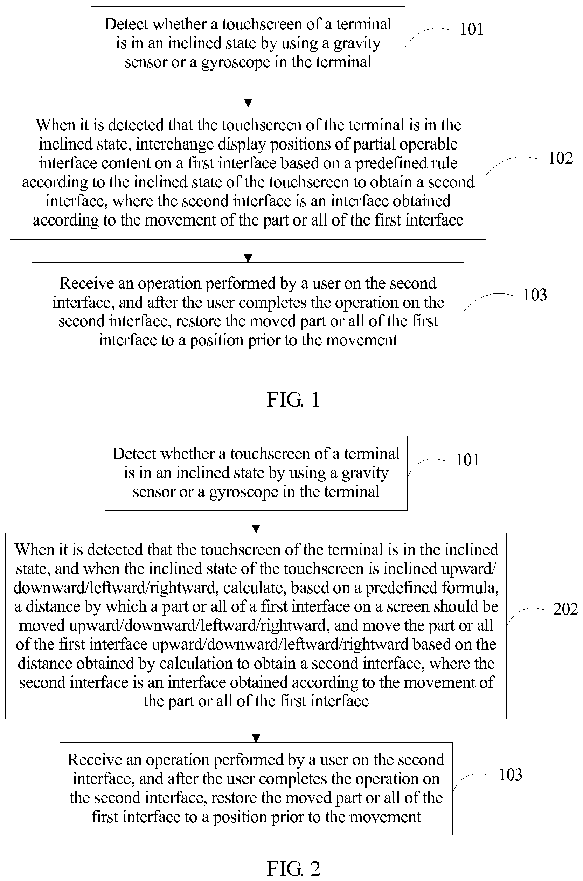

As shown in FIG. 1, in an embodiment of an interface operation method provided in the present invention, the method may include the following steps:

101. Detect whether a touchscreen of a terminal is in an inclined state by using a gravity sensor or a gyroscope in the terminal, where the being in an inclined state includes having an inclined angle in a preset range in a preset direction (which may be implemented, for example, when a user tilts a mobile phone), or having acceleration or displacement in a preset range in a preset direction (which may be implemented, for example, when a user moves or swings a mobile phone).

The preset direction may be upward/downward/leftward/rightward/upward-leftward/downward-leftward/upward-ri ghtward/downward-rightward, and a reference object for the preset direction may include one or more of the following: the mobile phone, a plane on which a touchscreen of the mobile phone is located, a horizontal plane, a vertical plane, an X-axis/a Y-axis of the horizontal plane, an X-axis/a Y-axis of the plane on which the touchscreen of the mobile phone is located, and the like. A specific preset direction and reference object may be selected and understood according to an actual situation. In this specification, for other content related thereto, refer to the description herein, and details are not described.

102. When it is detected that the touchscreen of the terminal is in the inclined state, move, based on a predefined rule according to the inclined state of the touchscreen, a part or all of a first interface that is currently displayed to the user and is on a screen of the touchscreen to obtain a second interface, where the second interface is an interface obtained according to the movement of the part or all of the first interface.

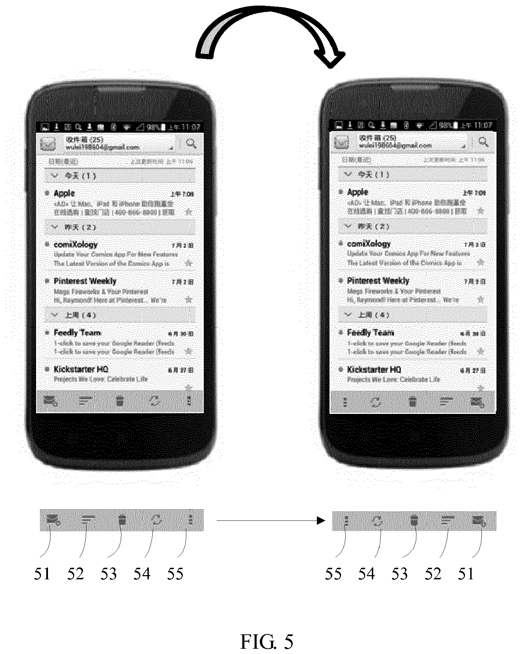

The moving, based on a predefined rule according to the inclined state of the touchscreen, a part or all of a first interface that is currently displayed to the user and is on a screen of the touchscreen includes: interchanging display positions of partial operable interface content on the first interface based on the predefined rule according to the inclined state of the touchscreen. For example, as shown in FIG. 5, when a right-handed user cannot reach a toolbar icon, such as an icon 51, close to a left edge of a toolbar of a mobile phone, the mobile phone may be made in a preset inclined state by tilting the mobile phone (such as tilting leftward or tilting rightward, swinging the mobile phone (such as swinging leftward or swinging rightward), or the like, so that display positions of icons (the icons may be understood as a part of the first interface) on the toolbar on the first interface that the mobile phone currently displays are interchanged. For example, the mobile phone may be tilted rightward or swung rightward, so that display positions of toolbar icons 51 and 52 that are close to the left edge of the toolbar of the mobile phone are respectively interchanged with those of toolbar icons 55 and 54 close to a right edge. For another example, display positions of icons may be changed by means of simple movement, rotation with an animation effect, or in another manner, so that icon display is adjusted as follows: The toolbar icons 51 and 52 close to the left edge are displayed on the right, and the toolbar icons 55 and 54 originally located on the right are displayed on the left. That is, as shown in FIG. 5, toolbar icons 51, 52, 53, 54, and 55 at a lower part of an interface of a terminal such as the mobile phone are displayed as icons 55, 54, 53, 52, and 51 after display positions of a part or all of the icons are interchanged of display positions of a part or all of the icons is performed. Because the icon 53 is located in a middle position of the interface, a position of the icon 53 may not be adjusted, which may also be understood as follows: A display position of the icon 53 after adjustment is the same as an original display position. Then, the toolbar icon 51, which is originally close to the left edge of toolbar of the mobile phone, enters an operable range of the user's right hand. Shifted toolbar icons are restored to original positions after the user completes a finger tap operation, that is, the icons are displayed as the icons 51, 52, 53, 54, and 55. For details, refer to step 103.

When the display positions of the toolbar icons are interchanged, the display positions of the icons 51 and 52 may be respectively interchanged with those of the icons 55 and 54, or the display positions of the icons 51 and 52 may be interchanged as a whole with an overall position of the icons 54 and 55. That is, the icons are displayed as the icons 54, 55, 53, 51, and 52 after display positions of a part or all of the icons are interchanged of display positions is performed, so that the icon 51 originally located on the leftmost can be displayed, after adjustment of display positions, on a position close to the middle of the interface, and the icon 51 enters the operable range of the user's right hand, which makes it more convenient and comfortable for the user to tap the icon 51 using the right hand.

103. Receive an operation performed by the user on the second interface, and after the user completes the operation on the second interface, restore the moved part or all of the first interface to a position prior to the movement.

Specifically, two cases may be included. In a first case, after the user completes the operation on the second interface, the terminal can automatically restore the moved part or all of the first interface to the position prior to the movement. In a second case, the terminal restores the moved part or all of the first interface to the position prior to the movement according to a state change of the touchscreen of the terminal detected by the gravity sensor or the gyroscope in the terminal (for example, after completing the operation on the second interface, the user rotates the mobile phone, so that the mobile phone is restored from a previous inclined state to an original non-inclined state). Generally, after the user completes the finger tap operation, the terminal is generally restored by the user to a predefined angle range of the non-inclined state, so that the terminal may restore the shifted toolbar icons to the original positions according to the state change of the touchscreen of the terminal detected by the gravity sensor or the gyroscope in the terminal, or even if the terminal is still in a predefined angle range of the inclined state, the user generally has completed the operation on the first interface, and then the terminal can automatically restore the shifted toolbar icons to the original positions. Both the two cases can help the user continue to comfortably view the interface. Ease of viewing the interface by the user and convenience of performing an operation on the interface by the user are both considered. The two cases can be selected for use according to an actual requirement.

The part of the first interface is a part or all of operable interface content on the first interface, where the operable interface content includes at least one of an icon, a button, or a user selection button.

A position of the entire interface or a position of partial content on the interface is adjusted according to the inclined state of the touchscreen, so that the user can more conveniently perform an operation on operable interface content that is originally beyond a movement range of a holding hand. After the user completes the operation, an adjusted interface is restored to the unadjusted interface, so that the user can continue to comfortably view the accustomed interface in a way with which the user is previously familiar. Ease of viewing the interface by the user and convenience of performing an operation on the interface by the user are both considered, which improves user-friendliness of a terminal interface and user experience.

Specifically, the inclined state of the touchscreen may be inclined leftward, inclined rightward, inclined upward, inclined downward, inclined upward-leftward, inclined downward-leftward, inclined upward-rightward, or inclined downward-rightward. For example, specifically, a user may tilt a mobile phone upward/downward/leftward/rightward, so that a touchscreen of the mobile phone is in an inclined upward/downward/leftward/rightward state. For another example, specifically, a user may swing a mobile phone leftward/rightward, so that a touchscreen of the mobile phone is in an inclined leftward/rightward state.

In this embodiment, the second interface may be specifically an interface obtained after the part or all of the first interface is moved. After the position of the part or all of the first interface is adjusted, the second interface is obtained. The user performs an operation on the second interface, and after the user completes the operation on the second interface, the terminal restores the moved part or all of the first interface to the position prior to the movement.

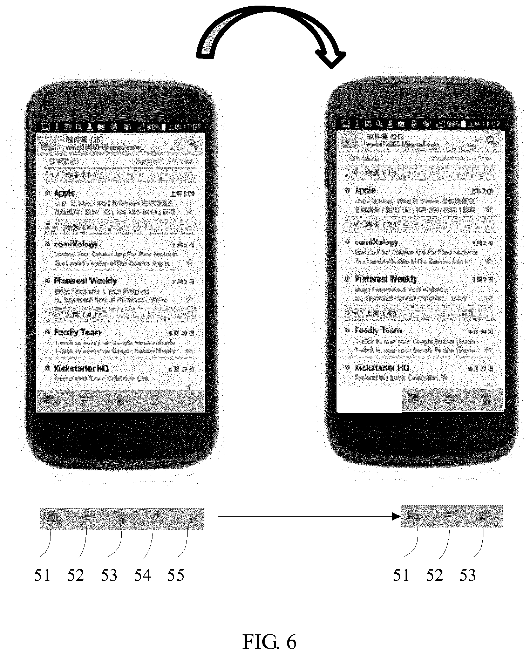

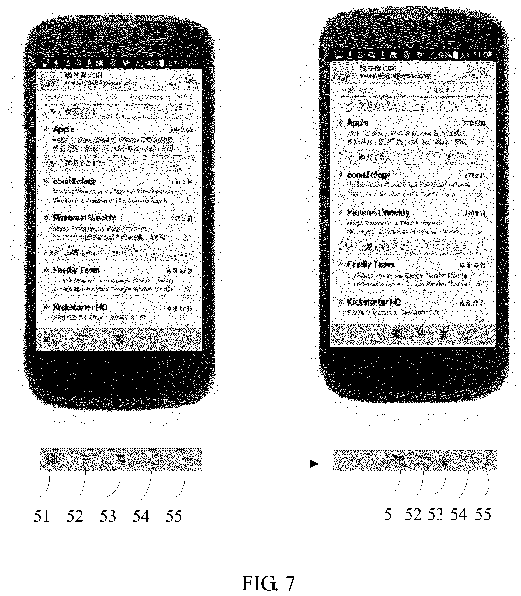

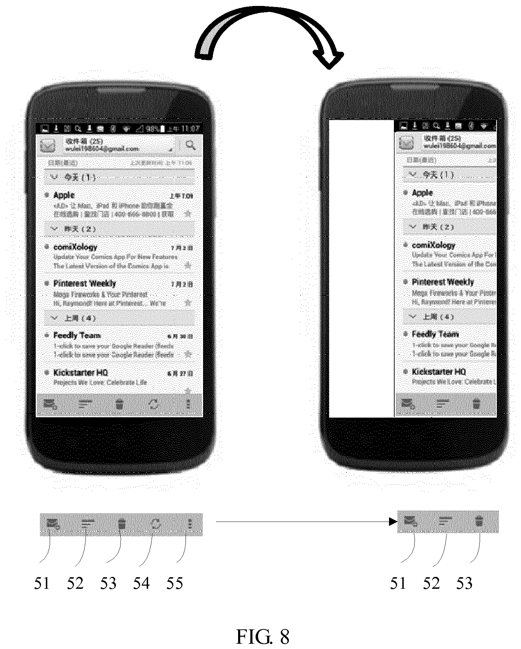

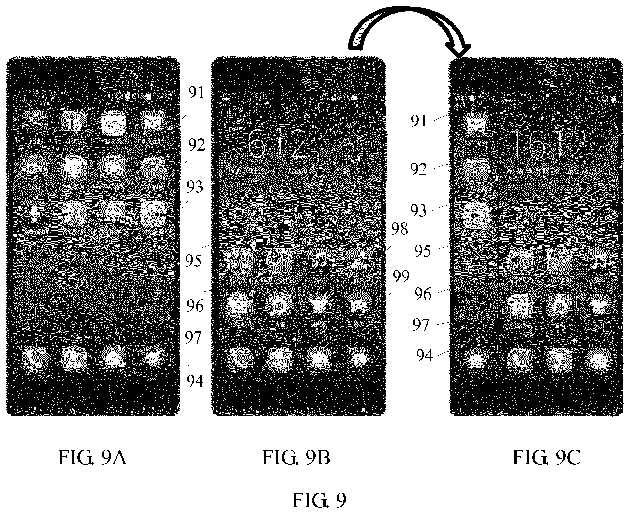

In another embodiment of the present invention, as shown in FIG. 2, step 102 can be replaced with step 202. The moving, based on a predefined rule according to the inclined state of the touchscreen, a part or all of a first interface that is currently displayed to the user and is on a screen of the touchscreen includes: when the inclined state of the touchscreen is inclined upward/downward/leftward/rightward, calculating, based on a predefined formula, a distance by which the part or all of the first interface on the screen should be moved upward/downward/leftward/rightward, and move the part or all of the first interface upward/downward/leftward/rightward based on the distance obtained by calculation. For example, as shown in FIG. 6 or FIG. 7, when a right-handed user cannot reach a toolbar icon, such as an icon 51, close to a left edge of a toolbar of a mobile phone, the mobile phone may be tilted rightward (that is, a left side is high, and a right side is low), or swung rightward, so that an icon (which may be understood as the part of the first interface) on the toolbar on a first interface that the mobile phone currently displays is shifted rightward by a particular distance. As shown in FIG. 6, a toolbar (the toolbar may be understood as the first interface, or when an interface currently displayed in an entire screen area of the mobile phone is understood as a first interface, the toolbar may be understood as a part of the first interface) at a lower part of the interface, or a part or all of icons included in the toolbar may be shifted rightward by a particular distance. After being shifted, icons 54 and 55 are invisible on the interface, and icons 51, 52, and 53 are shifted rightward as a whole by a particular distance, so that the icon 51 enters an operable range of the user's right hand. After the user completes a finger tap operation, shifted toolbar icons are restored to original positions, for example, the icons 51, 52, 53, 54, and 55 may be displayed again. Alternatively, as shown in FIG. 7, a part or all of icons (which may be understood as a part of the first interface) on a toolbar (the toolbar may be understood as the first interface, or when an interface currently displayed in an entire screen area of the mobile phone may be understood as a first interface, the toolbar is understood as a part of the first interface) at a lower part of the interface may be shifted rightward by a particular distance. After being shifted, icons 51, 52, 53, 54 and 55 are still visible on the interface, and a spacing between icons becomes smaller, so that the icon 51 enters an operable range of the user's right hand. After the user completes a finger tap operation, shifted toolbar icons are restored to original positions, for example, the icons 51, 52, 53, 54, and 55 with an original spacing may be displayed again. For another example, as shown in FIG. 8, when a right-handed user cannot reach a toolbar icon such as, an icon 51, close to a left edge of a toolbar of a mobile phone, the mobile phone may be tilted rightward (that is, a left side is high, and a right side is low), or swung rightward, so that a first interface (an interface currently displayed in an entire screen area of the mobile phone may be understood as the first interface) that the mobile phone currently displays is shifted rightward as a whole by a particular distance. As shown in FIG. 8, the first interface may be shifted rightward as a whole by a particular distance. After being shifted, a right half part of the first interface including icons 54 and 55 is invisible on the interface, and a left half part of the first interface including icons 51, 52, and 53 is shifted rightward as a whole by a particular distance, so that the icon 51 enters an operable range of the user's right hand. After the user completes a finger tap operation, shifted toolbar icons are restored to original positions, for example, the first interface may be restored for display, so that the icons 51, 52, 53, 54, and 55 are displayed again. For another example, as shown in FIG. 9, a fourth interface displayed in a screen area of a mobile phone shown in FIG. 9A may be a previous interface or a next interface of a first interface shown in FIG. 9B. That the fourth interface is the previous interface of the first interface is used an example for description herein. When a right-handed user cannot reach, on the first interface (an interface currently displayed in an entire mobile phone screen area may be understood as the first interface) that is shown in FIG. 9B and that the mobile phone currently displays, an icon, such as an icon 95, close to a left edge, the mobile phone may be tilted rightward (that is, a left side is high, and a right side is low), or swung rightward, so that the first interface that the mobile phone currently displays is shifted rightward as a whole by a particular distance. As shown in FIG. 9C, the first interface may be shifted rightward as a whole by a particular distance. After being shifted, a right half part of the first interface including icons 98 and 99 is invisible on the interface, and a left half part of the first interface including icons 95, 96, and 97 is shifted rightward as a whole by a particular distance, so that the icon 95 enters an operable range of the user's right hand. After the user completes a finger tap operation, a shifted interface or icons are restored to original positions, for example, the first interface may be restored for display, including that display positions of the icons 95, 96, 97, 98, and 99 are restored. In a second interface shown in FIG. 9C, the second interface includes an interface obtained after a part or all of the first interface is moved, and a third interface presented by space vacated on the screen after the part or all of the first interface is moved, where the third interface may be a part or all of the fourth interface, and the third interface shown in FIG. 9C is a part of the fourth interface. When the third interface and the interface obtained after the part or all of the first interface is moved is presented on the screen of the mobile phone at the same time, the user may perform an interactive operation between the third interface and the interface obtained after the part or all of the first interface is moved. For example, an icon may be dragged from one interface to another interface, for example, the icon 95 may be dragged to the third interface, which makes it convenient for the user to implement an interactive operation between two interfaces, provides a new implementation manner of an interactive operation between two interfaces, enriches functions of a terminal, and improves user experience.

Specifically, the inclined state of the touchscreen may be inclined leftward, inclined rightward, inclined upward, inclined downward, inclined upward-leftward, inclined downward-leftward, inclined upward-rightward, or inclined downward-rightward. For example, specifically, a user may tilt a mobile phone upward/downward/leftward/rightward, so that a touchscreen of the mobile phone is in an inclined upward/downward/leftward/rightward state. For another example, specifically, a user may swing a mobile phone leftward/rightward, so that a touchscreen of the mobile phone is in an inclined leftward/rightward state.

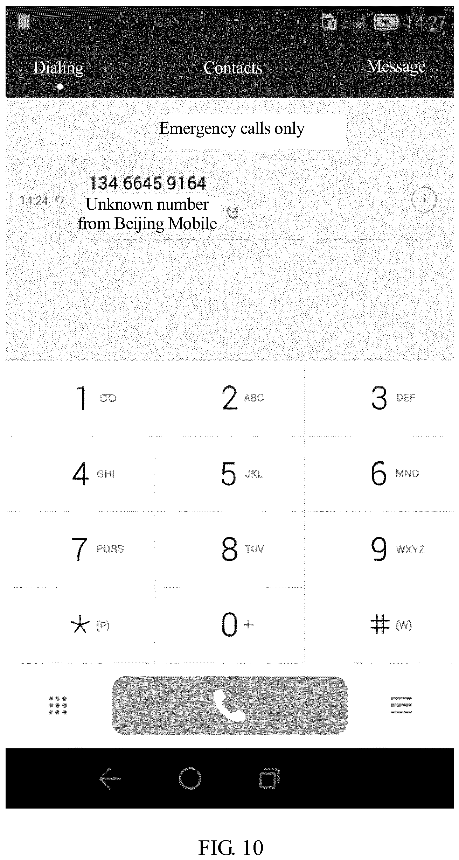

In some embodiments of the present invention, as shown in FIG. 10, operable interface content on the first interface may be a virtual keyboard. In some embodiments of the present invention, the operable interface content on the first interface may be an input window. This embodiment of the present invention imposes no limitation on an application scenario of the virtual keyboard and the input window application. For example, in a dialing interface shown in FIG. 10, the virtual keyboard may be a digital virtual keyboard; in a text editing interface, such as in an SMS message editing interface or a WeChat editing interface, the virtual keyboard may be a Pinyin/letter virtual keyboard, or may be a special symbol virtual keyboard; the input window may be a text input window corresponding to the virtual keyboard, or may be an input window, such as a text input window or a voice input window, preset on the first interface by the terminal.

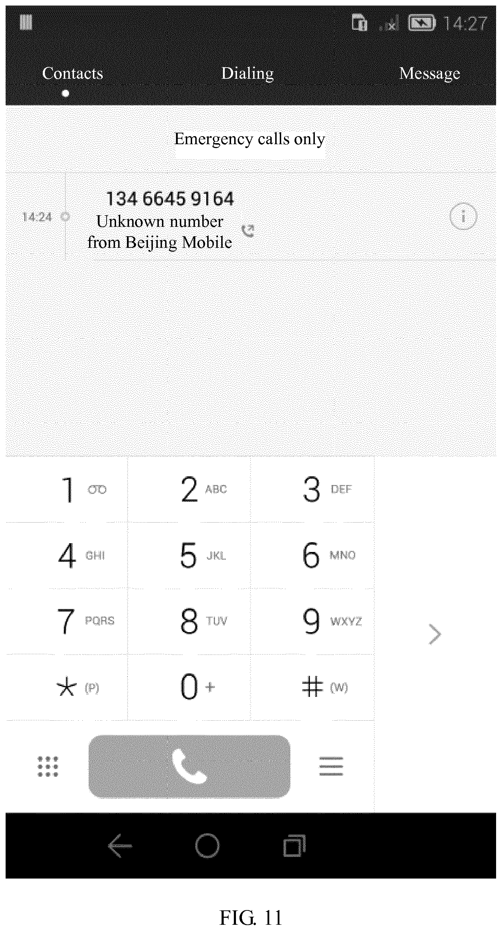

In an implementation manner in this embodiment of the present invention, when it is detected that the inclined state of the touchscreen of the terminal is inclined leftward, the virtual keyboard is shrunk according to the inclined state of the touchscreen, a distance by which the virtual keyboard on the first interface on the screen is to be moved leftward is calculated based on the predefined formula, and the virtual keyboard is moved leftward based on the distance obtained by calculation to obtain the second interface. When it is detected that the touchscreen is inclined leftward, generally, the user operates with the left hand. As shown in FIG. 11, in this case, the terminal shrinks a virtual dialing keyboard, and moves the virtual dialing keyboard leftward based on a distance calculated by the predefined formula; the shrunk virtual dialing keyboard is displayed close to a left side of the screen, and the user may perform a one-hand operation with the left hand, which improves one-hand operation efficiency of the user. Preferably, after the virtual keyboard is shrunk and moved leftward, a coverage area of the original virtual dialing keyboard on the first interface on the screen may include a rightward pointing arrow, where the rightward pointing arrow may be used to indicate that the user can tap the rightward pointing arrow to implement restoration of the virtual dialing keyboard, that is, the adjusted virtual dialing keyboard is extended for display, and the virtual dialing keyboard is presented in the coverage area of the original virtual dialing keyboard. Optionally, in this implementation manner, the virtual keyboard may be an input window, that is, when it is detected that the inclined state of the touchscreen of the terminal is inclined leftward, a distance by which the input window on the first interface on the screen is to be moved leftward is calculated based on the predefined formula according to the inclined state of the touchscreen, and the input window is moved leftward based on the distance obtained by calculation to obtain the second interface. After the input window is moved leftward, it is convenient for the user to modify editing content in the input window with a single hand, which improves one-hand operation efficiency. Optionally, if the first interface includes both a virtual keyboard and an input window, when the terminal detects that the inclined state of the touchscreen is inclined leftward, the terminal can move the virtual keyboard and the input window leftward at the same time.

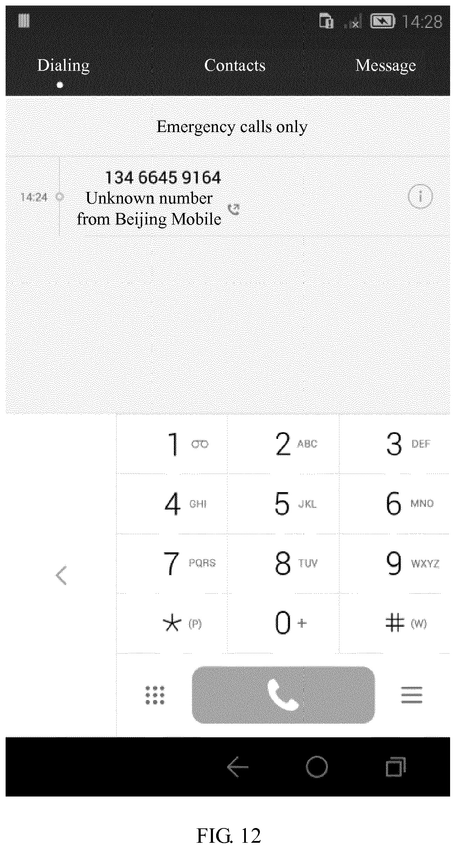

In an implementation manner in this embodiment of the present invention, when it is detected that the inclined state of the touchscreen of the terminal is inclined rightward, the virtual keyboard is shrunk according to the inclined state of the touchscreen, a distance by which the virtual keyboard on the first interface on the screen is to be moved rightward is calculated based on the predefined formula, and the virtual keyboard is moved rightward based on the distance obtained by calculation to obtain the second interface. When it is detected that the touchscreen is inclined rightward, generally, the user operates with the right hand. As shown in FIG. 12, in this case, the terminal shrinks a virtual dialing keyboard, and moves the virtual dialing keyboard rightward based on a distance calculated by the predefined formula; the shrunk virtual dialing keyboard is displayed close to a right side of the screen, and the user may perform a one-hand operation with the right hand, which improves one-hand operation efficiency of the user. Preferably, after the virtual dialing keyboard is shrunk and moved rightward, a coverage area of an original virtual dialing keyboard on the first interface on the screen may include a leftward pointing arrow, where the leftward pointing arrow may be used to indicate that the user can tap the leftward pointing arrow to implement restoration of the virtual dialing keyboard, that is, the adjusted virtual dialing keyboard is extended for display, and the virtual dialing keyboard is presented in the coverage area of the original virtual dialing keyboard. Optionally, in this implementation manner, the virtual keyboard may be an input window, that is, when it is detected that the inclined state of the touchscreen of the terminal is inclined rightward, a distance by which the input window on the first interface on the screen is to be moved rightward is calculated based on the predefined formula according to the inclined state of the touchscreen, and the input window is moved rightward based on the distance obtained by calculation to obtain the second interface. After the input window is moved rightward, it is convenient for the user to modify editing content in the input window with a single hand, which improves one-hand operation efficiency. Optionally, if the first interface includes both a virtual keyboard and an input window, when the terminal detects that the inclined state of the touchscreen is inclined rightward, the terminal can move the virtual keyboard and the input window rightward at the same time.

In an implementation manner in this embodiment of the present invention, when it is detected that the inclined state of the touchscreen of the terminal is inclined upward, a distance by which the virtual keyboard on the first interface on the screen is to be moved upward is calculated based on the predefined formula according to the inclined state of the touchscreen, and the virtual keyboard is moved upward based on the distance obtained by calculation to obtain the second interface, where the virtual keyboard may be replaced with an input window. In this implementation manner, the virtual keyboard or the input window is arranged in the middle or at a lower part of the first interface. When the first interface includes both a virtual keyboard and an input window, and the terminal detects that the inclined state of the touchscreen is inclined upward, the terminal can move the virtual keyboard and the input window upward at the same time, which makes it convenient for the user to perform a one-hand operation at an upper part on the screen.

In an implementation manner in this embodiment of the present invention, when it is detected that the inclined state of the touchscreen of the terminal is inclined downward, a distance by which the virtual keyboard on the first interface on the screen is to be moved downward is calculated based on the predefined formula according to the inclined state of the touchscreen, and the virtual keyboard is moved downward based on the distance obtained by calculation to obtain the second interface. Optionally, the virtual keyboard may be replaced with an input window. In this implementation manner, the virtual keyboard or the input window is arranged in the middle or at an upper part of the first interface. When the first interface includes both a virtual keyboard and an input window, and the terminal detects that the inclined state of the touchscreen is inclined upward, the terminal can move the virtual keyboard and the input window downward at the same time, which makes it convenient for the user to perform a one-hand operation at a lower part on the screen.

In the foregoing embodiment of the present invention, after the user completes an operation on the virtual keyboard and/or in the input window, for example, the terminal detects that a call is made, a message is sent, or notepad editing is completed, the terminal can restore the virtual keyboard and/or the input window to a position prior to the movement. Alternatively, when a second interface is generated by the terminal, a user can restore the virtual keyboard and/or the input window to a position prior to the movement by using a corresponding operation on the second interface. For example, as shown in FIG. 11 or FIG. 12, the user can tap a small arrow near the virtual keyboard to complete position restoration of the virtual keyboard. Optionally, the user can restore the virtual keyboard and/or the input window to a position prior to the movement by tilting the terminal. For example, as shown in FIG. 11, after the terminal detects that the terminal is inclined leftward, and a second interface is generated, when the terminal detects that the terminal is inclined rightward, the terminal can restore the virtual keyboard to a position prior to the movement.

Certainly, some preferred implementation manners are merely provided in the foregoing embodiment of the present invention. In actual execution, a corresponding tilt operation may be executed according to selection of a user. For example, setting options of a tilting action and a virtual keyboard/an input window are provided by a terminal, so that a user sets a correspondence between the tilting action and the virtual keyboard/the input window. For example, a user may set a rightward tilt of a terminal device to be corresponding to moving "a virtual keyboard and/or an input window" leftward, and set a leftward tilt of a terminal device to be corresponding to moving "a virtual keyboard and/or an input window" rightward, which is not limited herein.

In this embodiment of the present invention, the second interface includes an interface obtained after the part or all of the first interface is moved, and a third interface presented by space vacated on the screen after the part or all of the first interface is moved; and
the receiving an operation performed by the user on the second interface includes at least one of the following:
receiving an operation performed by the user on an interface obtained after the part or all of the first interface is moved, where in this case, it can be convenient for the user to perform an operation on operable interface content that is on the first interface and beyond a movement range of a holding hand; or
receiving an operation performed by the user on the third interface, where in this case, the third interface presented by space vacated on the screen is originally hidden under the first interface that is currently displayed to the user; after the part or all of the first interface is moved, the third interface is revealed, which makes it convenient for the user to perform an operation on operable interface content on an interface under the current interface; or
receiving an interactive operation performed by the user between an interface obtained after the part or all of the first interface is moved and the third interface, where in this case, it can be convenient for the user to perform an operation on operable interface content that is on the first interface and beyond a movement range of a holding hand, and it is also convenient for the user to perform an operation on operable interface content on an interface hidden under the current interface. Compared with the prior art, the present invention provides a new manner of performing an interactive operation between the two interfaces by the user, enriches functions of a terminal, and improves user experience. The interactive operation may be that an icon is dragged from one interface to another interface.

The third interface may be specifically a part or all of a previous interface or a next interface of the first interface.

In an embodiment of an interface operation method provided in the present invention, the following manner of detecting whether a terminal is in an inclined state and moving a part or all of an interface according to an inclined angle is provided. Content related thereto in other embodiments may be implemented with reference to the following content, or implemented in another manner. Details are as follows.

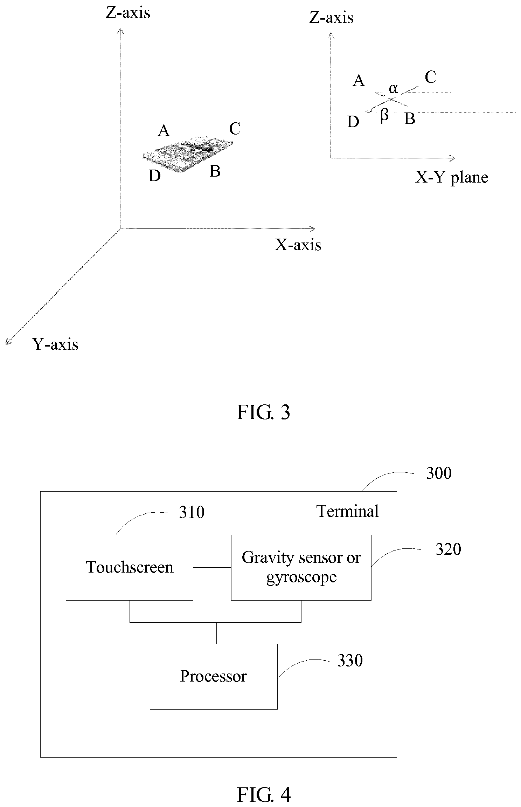

In FIG. 3, A, B, C, and D are respectively midpoints on a left edge, a right edge, an upper edge, and a lower edge of a terminal device.
1. When a single-handed tilting operation function is enabled, a gyroscope may be used to detect a position and an angle of a terminal in space, and separately record an angle α between an AB line of the terminal and an XY plane and an angle β between a CD line and the XY plane.
2. That α is greater than a preset value α0, or β is greater than a preset value β0 may be referred to as an inclined state.
3. When the terminal is in the inclined state, movement displacement of interface content on a screen is calculated based on the following formulas according to the foregoing recorded angle α and/or β:
   Movement displacement in a left or right direction = Movement coefficient 1 * Preset maximum movable range 1;
   when 90 > α > α0, Movement coefficient 1 = (α - α0)/(90 - α0);
   when α ≥ 90, Movement coefficient 1 = 1;
   Movement displacement in an up or a down direction = Movement coefficient 2 * Preset maximum movable range 2;
   when 90 > β > β0, Movement coefficient 2 = (β - β0)/(90 - β0);
   when β ≥ 90, Movement coefficient 2 = 1.
   For different design schemes, a value of the preset maximum movable range 1 or 2 may be from 0 (that is, interface content cannot be moved) to a screen width or length.
   The following formulas are merely exemplary, and specifically, the formulas may be preset or adjusted according to an actual requirement.
4. Interface content on a screen of a terminal is moved to a corresponding position according to the calculated displacement. According to different designs, some content on the interface may need to be moved, and some other content does not need to be moved.

An embodiment of the present invention provides a terminal. FIG. 4 shows an embodiment of the terminal provided in the present invention. In this embodiment, the terminal 300 includes:
a touchscreen 310, configured to present an interface on a screen of the touchscreen 310;
a gravity sensor or a gyroscope 320, configured to detect whether the touchscreen 310 is in an inclined state, where the being in an inclined state includes having an inclined angle in a preset range in a preset direction (which may be implemented, for example, when a user tilts a mobile phone), or having acceleration or displacement in a preset range in a preset direction (which may be implemented, for example, when a user moves or swings a mobile phone); and
a processor 330, configured to move, based on a predefined rule according to the inclined state of the touchscreen 310, a part or all of a first interface that is currently displayed to a user and is on a screen of the touchscreen 310 to obtain a second interface when the gravity sensor or the gyroscope 320 detects that the touchscreen 310 of the terminal is in the inclined state, where the second interface is an interface obtained according to the movement of the part or all of the first interface, and the processor 330 is further configured to receive an operation performed by the user on the second interface, and after the user completes the operation on the second interface, restore the moved part or all of the first interface is restored to a position prior to the movement.

Specifically, two cases may be included. In a first case, after the user completes the operation on the second interface, the processor 330 in the terminal 300 can automatically restore the moved part or all of the first interface to the position prior to the movement. In a second case, the terminal 300 restores the moved part or all of the first interface to the position prior to the movement according to a state change of the touchscreen 310 of the terminal 300 detected by the gravity sensor or the gyroscope 320 in the terminal 300 (for example, after completing the operation on the second interface, the user rotates the terminal 300 such as a mobile phone, so that the mobile phone is restored from a previous inclined state to an original non-inclined state). Generally, after the user completes the finger tap operation, the terminal is generally restored by the user to a predefined angle range of the non-inclined state, so that the terminal may restore the shifted toolbar icons to the original positions according to the state change of the touchscreen of the terminal detected by the gravity sensor or the gyroscope in the terminal, or even if the terminal is still in a predefined angle range of the inclined state, the user generally has completed the operation on the first interface, and then the terminal can automatically restore the shifted toolbar icons to the original positions. Both the two cases can help the user continue to comfortably view the interface. Ease of viewing the interface by the user and convenience of performing an operation on the interface by the user are both considered. The two cases can be selected for use according to an actual requirement.

The part of the first interface is a part or all of operable interface content on the first interface, where the operable interface content includes at least one of an icon, a button, or a user selection button.

In an implementation manner in this embodiment of the present invention, the operable interface content on the first interface includes a virtual keyboard; the processor 330 may be configured to: when the gravity sensor or the gyroscope detects that the inclined state of the touchscreen of the terminal is inclined leftward, shrink the virtual keyboard according to the inclined state of the touchscreen, calculate, based on the predefined formula, a distance by which the virtual keyboard on the first interface on the screen is to be moved leftward, and move the virtual keyboard leftward based on the distance obtained by calculation to obtain the second interface; or the processor 330 may be configured to: when the gravity sensor or the gyroscope detects that the inclined state of the touchscreen of the terminal is inclined rightward, shrink the virtual keyboard according to the inclined state of the touchscreen, calculate, based on the predefined formula, a distance by which the virtual keyboard on the first interface on the screen is to be moved rightward, and move the virtual keyboard rightward based on the distance obtained by calculation to obtain the second interface; or the processor 330 may be configured to: when the gravity sensor or the gyroscope detects that the inclined state of the touchscreen of the terminal is inclined upward, calculate, according to the inclined state of the touchscreen based on the predefined formula, a distance by which the virtual keyboard on the first interface on the screen is to be moved upward, and move the virtual keyboard upward based on the distance obtained by calculation to obtain the second interface; or the processor 330 may be configured to: when the gravity sensor or the gyroscope detects that the inclined state of the touchscreen of the terminal is inclined downward, calculate, according to the inclined state of the touchscreen based on the predefined formula, a distance by which the virtual keyboard on the first interface on the screen is to be moved downward, and move the virtual keyboard downward based on the distance obtained by calculation to obtain the second interface.

In an implementation manner in this embodiment of the present invention, the operable interface content on the first interface includes an input window, and the processor 330 may be configured to: when the gravity sensor or the gyroscope detects that the inclined state of the touchscreen of the terminal is inclined leftward, calculate, according to the inclined state of the touchscreen based on the predefined formula, a distance by which the input window on the first interface on the screen is to be moved leftward, and move the input window leftward based on the distance obtained by calculation to obtain the second interface; or the processor 330 may be configured to: when the gravity sensor or the gyroscope detects that the inclined state of the touchscreen of the terminal is inclined rightward, calculate, according to the inclined state of the touchscreen based on the predefined formula, a distance by which the input window on the first interface on the screen is to be moved rightward, and move the input window rightward based on the distance obtained by calculation to obtain the second interface; or the processor 330 may be configured to: when the gravity sensor or the gyroscope detects that the inclined state of the touchscreen of the terminal is inclined upward, calculate, according to the inclined state of the touchscreen based on the predefined formula, a distance by which the input window on the first interface on the screen is to be moved upward, and move the input window upward based on the distance obtained by calculation to obtain the second interface; or the processor 330 may be configured to: when the gravity sensor or the gyroscope detects that the inclined state of the touchscreen of the terminal is inclined downward, calculate, according to the inclined state of the touchscreen based on the predefined formula, a distance by which the input window on the first interface on the screen is to be moved downward, and move the input window downward based on the distance obtained by calculation to obtain the second interface.

Specifically, the inclined state of the touchscreen 310 is inclined leftward, inclined rightward, inclined upward, inclined downward, inclined upward-leftward, inclined downward-leftward, inclined upward-rightward, or inclined downward-rightward. For example, specifically, a user may tilt a mobile phone upward/downward/leftward/rightward, so that a touchscreen of the mobile phone is in an inclined upward/downward/leftward/rightward state. For another example, specifically, a user may swing a mobile phone leftward/rightward, so that a touchscreen of the mobile phone is in an inclined leftward/rightward state (the mobile phone may have acceleration in a leftward/rightward direction).

In an embodiment of the terminal provided in the present invention, that the processor 330 is configured to move, based on the predefined rule according to the inclined state of the touchscreen 310, a part or all of the first interface that is currently displayed to the user and is on the screen of the touchscreen 310 is specifically that:
the processor 330 is configured to interchange display positions of partial operable interface content on the first interface based on the predefined rule according to the inclined state of the touchscreen 310.

In this embodiment, the second interface may be specifically an interface obtained after the part or all of the first interface is moved.

In another embodiment of the terminal provided in the present invention, that the processor 330 is configured to move, based on the predefined rule according to the inclined state of the touchscreen 310, a part or all of the first interface that is currently displayed to the user and is on the screen of the touchscreen 310 is specifically that:
the processor 330 is configured to: when the inclined state of the touchscreen 310 of the terminal is inclined upward/downward/leftward/rightward, calculate, based on the predefined formula, a distance by which the part or all of the first interface on the screen should be moved upward/downward/leftward/rightward, and move the part or all of the first interface upward/downward/leftward/rightward based on the distance obtained by calculation.

In this embodiment, the second interface may include an interface obtained after the part or all of the first interface is moved, and a third interface presented by space vacated on the screen after the part or all of the first interface is moved; and
that the processor 330 is configured to receive an operation performed by the user on the second interface includes at least one of the following:
the processor 330 is configured to receive an operation performed by the user on an interface obtained after the part or all of the first interface is moved; or
the processor 330 is configured to receive an operation performed by the user on the third interface; or
the processor 330 is configured to receive an interactive operation performed by the user between an interface obtained after the part or all of the first interface is moved and the third interface.

Further embodiments of the present invention are provided in the following. It should be noted that the numbering used in the following section does not necessarily need to comply with the numbering used in the previous sections.
Embodiment 1. An interface operation method, wherein the method comprises:
   detecting whether a touchscreen of a terminal is in an inclined state by using a gravity sensor or a gyroscope in the terminal, wherein the being in an inclined state comprises having an inclined angle in a preset range in a preset direction, or having acceleration or displacement in a preset range in a preset direction;
   moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state, wherein the second interface is an interface obtained according to the movement of the part or all of the first interface, and the moving, based on a predefined rule according to the inclined state of the touchscreen, a part or all of a first interface that is currently displayed to a user and is on a screen of the touchscreen comprises: interchanging display positions of partial operable interface content on the first interface based on the predefined rule according to the inclined state of the touchscreen; and
   receiving an operation performed by the user on the second interface, and after the user completes the operation on the second interface, restoring the moved part or all of the first interface to a position prior to the movement;
   wherein the part of the first interface is a part or all of operable interface content on the first interface, wherein the operable interface content comprises at least one of an icon, a button, or a user selection button.
Embodiment 2. The method according to Embodiment 1, wherein the second interface is specifically an interface obtained after the part or all of the first interface is moved.
Embodiment 3. An interface operation method, wherein the method comprises:
   detecting whether a touchscreen of a terminal is in an inclined state by using a gravity sensor or a gyroscope in the terminal, wherein the being in an inclined state comprises having an inclined angle in a preset range in a preset direction, or having acceleration or displacement in a preset range in a preset direction;
   moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state, wherein the second interface is an interface obtained according to the movement of the part or all of the first interface, and the moving, based on a predefined rule according to the inclined state of the touchscreen, a part or all of a first interface that is currently displayed to a user and is on a screen of the touchscreen comprises: when the inclined state of the touchscreen is inclined upward/downward/leftward/rightward, calculating, based on a predefined formula, a distance by which the part or all of the first interface on the screen should be moved upward/downward/leftward/rightward, and moving the part or all of the first interface upward/downward/leftward/rightward based on the distance obtained by calculation; and
   receiving an operation performed by the user on the second interface, and after the user completes the operation on the second interface, restoring the moved part or all of the first interface to a position prior to the movement;
   wherein the part of the first interface is a part or all of operable interface content on the first interface, wherein the operable interface content comprises at least one of an icon, a button, or a user selection button.
Embodiment 4. The method according to Embodiment 3, wherein the operable interface content on the first interface comprises a virtual keyboard, and the moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state comprises at least one of the following cases:
   when it is detected that the inclined state of the touchscreen of the terminal is inclined leftward, shrinking the virtual keyboard according to the inclined state of the touchscreen, calculating, based on the predefined formula, a distance by which the virtual keyboard on the first interface on the screen is to be moved leftward, and moving the virtual keyboard leftward based on the distance obtained by calculation to obtain the second interface;
   when it is detected that the inclined state of the touchscreen of the terminal is inclined rightward, shrinking the virtual keyboard according to the inclined state of the touchscreen, calculating, based on the predefined formula, a distance by which the virtual keyboard on the first interface on the screen is to be moved rightward, and moving the virtual keyboard rightward based on the distance obtained by calculation to obtain the second interface;
   when it is detected that the inclined state of the touchscreen of the terminal is inclined upward, calculating, according to the inclined state of the touchscreen based on the predefined formula, a distance by which the virtual keyboard on the first interface on the screen is to be moved upward, and moving the virtual keyboard upward based on the distance obtained by calculation to obtain the second interface; or
   when it is detected that the inclined state of the touchscreen of the terminal is inclined downward, calculating, according to the inclined state of the touchscreen based on the predefined formula, a distance by which the virtual keyboard on the first interface on the screen is to be moved downward, and moving the virtual keyboard downward based on the distance obtained by calculation to obtain the second interface.
Embodiment 5. The method according to Embodiment 3, wherein the operable interface content on the first interface comprises an input window, and the moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state comprises at least one of the following cases:
   when it is detected that the inclined state of the touchscreen of the terminal is inclined leftward, calculating, according to the inclined state of the touchscreen based on the predefined formula, a distance by which the input window on the first interface on the screen is to be moved leftward, and moving the input window leftward based on the distance obtained by calculation to obtain the second interface;
   when it is detected that the inclined state of the touchscreen of the terminal is inclined rightward, calculating, according to the inclined state of the touchscreen based on the predefined formula, a distance by which the input window on the first interface on the screen is to be moved rightward, and moving the input window rightward based on the distance obtained by calculation to obtain the second interface;
   when it is detected that the inclined state of the touchscreen of the terminal is inclined upward, calculating, according to the inclined state of the touchscreen based on the predefined formula, a distance by which the input window on the first interface on the screen is to be moved upward, and moving the input window upward based on the distance obtained by calculation to obtain the second interface; or
   when it is detected that the inclined state of the touchscreen of the terminal is inclined downward, calculating, according to the inclined state of the touchscreen based on the predefined formula, a distance by which the input window on the first interface on the screen is to be moved downward, and moving the input window downward based on the distance obtained of calculation to obtain the second interface.
Embodiment 6. The method according to any one of Embodiments 3 to 5, wherein the second interface comprises an interface obtained after the part or all of the first interface is moved, and a third interface presented by space vacated on the screen after the part or all of the first interface is moved; and the receiving an operation performed by the user on the second interface comprises at least one of the following:
   receiving an operation performed by the user on an interface obtained after the part or all of the first interface is moved; or
   receiving an operation performed by the user on the third interface; or
   receiving an interactive operation performed by the user between an interface obtained after the part or all of the first interface is moved and the third interface.
Embodiment 7. The method according to any one of Embodiments 1 to 6, wherein the inclined state of the touchscreen is inclined leftward, inclined rightward, inclined upward, inclined downward, inclined upward-leftward, inclined downward-leftward, inclined upward-rightward, or inclined downward-rightward.
Embodiment 8. A terminal, wherein the terminal comprises:
   a touchscreen, configured to present an interface on a screen of the touchscreen;
   a gravity sensor or a gyroscope, configured to detect whether the touchscreen is in an inclined state, wherein the being in an inclined state comprises having an inclined angle in a preset range in a preset direction, or having acceleration or displacement in a preset range in a preset direction; and
   a processor, configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state, wherein the second interface is an interface obtained according to the movement of the part or all of the first interface, and that the processor is configured to move, based on a predefined rule according to the inclined state of the touchscreen, a part or all of a first interface that is currently displayed to a user and is on a screen of the touchscreen is specifically that:
      the processor is configured to interchange display positions of partial operable interface content on the first interface based on the predefined rule according to the inclined state of the touchscreen; and
      the processor is further configured to receive an operation performed by the user on the second interface, and after the user completes the operation on the second interface, restore the moved part or all of the first interface to a position prior to the movement;
      wherein the part of the first interface is a part or all of operable interface content on the first interface, wherein the operable interface content comprises at least one of an icon, a button, or a user selection button.
Embodiment 9. The terminal according to Embodiment 7, wherein the second interface is specifically an interface obtained after the part or all of the first interface is moved.
Embodiment 10. A terminal, wherein the terminal comprises:
   a touchscreen, configured to present an interface on a screen of the touchscreen;
   a gravity sensor or a gyroscope, configured to detect whether the touchscreen is in an inclined state, wherein the being in an inclined state comprises having an inclined angle in a preset range in a preset direction, or having acceleration or displacement in a preset range in a preset direction; and
   a processor, configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state, wherein the second interface is an interface obtained according to the movement of the part or all of the first interface, and that the processor is configured to move, based on a predefined rule according to the inclined state of the touchscreen, a part or all of a first interface that is currently displayed to a user and is on a screen of the touchscreen is specifically that:
      the processor is configured to: when the inclined state of the touchscreen is inclined upward/downward/leftward/rightward, calculate, based on a predefined formula, a distance by which the part or all of the first interface on the screen should be moved upward/downward/leftward/rightward, and move the part or all of the first interface upward/downward/leftward/rightward based on the distance obtained by calculation; and
      the processor is further configured to receive an operation performed by the user on the second interface, and after the user completes the operation on the second interface, restore the moved part or all of the first interface to a position prior to the movement;
      wherein the part of the first interface is a part or all of operable interface content on the first interface, wherein the operable interface content comprises at least one of an icon, a button, or a user selection button.
Embodiment 11. The terminal according to Embodiment 10, wherein the operable interface content on the first interface comprises a virtual keyboard, and that the processor is configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state comprises:
   the processor is configured to: when the gravity sensor or the gyroscope detects that the inclined state of the touchscreen of the terminal is inclined leftward, shrink the virtual keyboard according to the inclined state of the touchscreen, calculate, based on the predefined formula, a distance by which the virtual keyboard on the first interface on the screen is to be moved leftward, and move the virtual keyboard leftward based on the distance obtained by calculation to obtain the second interface; or
   the processor is configured to: when the gravity sensor or the gyroscope detects that the inclined state of the touchscreen of the terminal is inclined rightward, shrink the virtual keyboard according to the inclined state of the touchscreen, calculate, based on the predefined formula, a distance by which the virtual keyboard on the first interface on the screen is to be moved rightward, and move the virtual keyboard rightward based on the distance obtained by calculation to obtain the second interface; or
   the processor is configured to: when the gravity sensor or the gyroscope detects that the inclined state of the touchscreen of the terminal is inclined upward, calculate, according to the inclined state of the touchscreen based on the predefined formula, a distance by which the virtual keyboard on the first interface on the screen is to be moved upward, and move the virtual keyboard upward based on the distance obtained by calculation to obtain the second interface; or
   the processor is configured to: when the gravity sensor or the gyroscope detects that the inclined state of the touchscreen of the terminal is inclined downward, calculate, according to the inclined state of the touchscreen based on the predefined formula, a distance by which the virtual keyboard on the first interface on the screen is to be moved downward, and move the virtual keyboard downward based on the distance obtained by calculation to obtain the second interface.
Embodiment 12. The terminal according to Embodiment 10, wherein the operable interface content on the first interface comprises an input window, and that the processor is configured to move, based on a predefined rule according to the inclined state of the touchscreen, a part or all of a first interface that is currently displayed to a user and is on a screen of the touchscreen to obtain a second interface when the gravity sensor or the gyroscope detects that the touchscreen of the terminal is in the inclined state comprises:
   the processor is configured to: when the gravity sensor or the gyroscope detects that the inclined state of the touchscreen of the terminal is inclined leftward, calculate, according to the inclined state of the touchscreen based on the predefined formula, a distance by which the input window on the first interface on the screen is to be moved leftward, and move the input window leftward based on the distance obtained by calculation to obtain the second interface; or
   the processor is configured to: when the gravity sensor or the gyroscope detects that the inclined state of the touchscreen of the terminal is inclined rightward, calculate, according to the inclined state of the touchscreen based on the predefined formula, a distance by which the input window on the first interface on the screen is to be moved rightward, and move the input window rightward based on the distance obtained by calculation to obtain the second interface; or
   the processor is configured to: when the gravity sensor or the gyroscope detects that the inclined state of the touchscreen of the terminal is inclined upward, calculate, according to the inclined state of the touchscreen based on the predefined formula, a distance by which the input window on the first interface on the screen is to be moved upward, and move the input window upward based on the distance obtained by calculation to obtain the second interface; or
   the processor is configured to: when the gravity sensor or the gyroscope detects that the inclined state of the touchscreen of the terminal is inclined downward, calculate, according to the inclined state of the touchscreen based on the predefined formula, a distance by which the input window on the first interface on the screen is to be moved downward, and move the input window downward based on the distance obtained of calculation to obtain the second interface.
Embodiment 13. The terminal according to any one of Embodiments 10 to 12, wherein the second interface comprises an interface obtained after the part or all of the first interface is moved, and a third interface presented by space vacated on the screen after the part or all of the first interface is moved; and
   that the processor is configured to receive an operation performed by the user on the second interface comprises at least one of the following:
   the processor is configured to receive an operation performed by the user on an interface obtained after the part or all of the first interface is moved; or
   the processor is configured to receive an operation performed by the user on the third interface; or
   the processor is configured to receive an interactive operation performed by the user between an interface obtained after the part or all of the first interface is moved and the third interface.
Embodiment 14. The terminal according to any one of Embodiments 8 to 14, wherein the inclined state of the touchscreen is inclined leftward, inclined rightward, inclined upward, inclined downward, inclined upward-leftward, inclined downward-leftward, inclined upward-rightward, or inclined downward-rightward.

For a specific working process of the foregoing terminal, refer to a corresponding process in the foregoing method embodiments, and details are not described.

It should be noted that, "inclined upward" or "inclined downward" in the inclined state of the touchscreen may include: a user tilts a mobile phone, so that the mobile phone is tilted upward or downward by a particular angle with respect to a plane on which the touchscreen of the mobile phone is located, or with respect to a horizontal plane; or a user moves or swings a mobile phone, so that the mobile phone has particular acceleration or displacement in a forward or backward direction with respect to the mobile phone, or with respect to a Y-axis of a plane on which the touchscreen of the mobile phone is located, where a value of the acceleration or displacement may be in a preset range. For another inclined state, refer to the foregoing descriptions, and the another inclined state is understood according to an actual situation.

It should further be noted that in this specification, relational terms such as first and second are only used to distinguish one entity or operation from another, and do not necessarily require or imply that any actual relationship or sequence exists between these entities or operations. Moreover, the terms "include", "include", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

A person of ordinary skill in the art may understand that all or some of the steps of the methods in the embodiments may be completed by a program instructing relevant hardware. The program may be stored in a readable storage medium of a terminal. When the program runs, all or some of the foregoing steps are performed. Examples of the storage medium are FLASH, EEPROM, and the like.

In the foregoing specific implementation manners, the objectives, technical solutions, and benefits of the present invention are further described in detail. It should be understood that different embodiments may be combined, and the foregoing descriptions are merely specific implementation manners of the present invention, but are not intended to limit the protection scope of the present invention. Any combination, modification, equivalent replacement, improvement, or the like made without departing from the spirit and principle of the present invention shall fall within the protection scope of the present invention.

## Claims

1. An interface operation method, wherein the method comprises:
detecting whether a touchscreen of a terminal is in an inclined state, wherein the being in an inclined state comprises having an inclined angle in a preset range in a preset direction, or having acceleration or displacement in a preset range in a preset direction;
moving, based on a predefined rule according to the inclined state of the touchscreen, a part or all of a first interface that is currently displayed to a user and is on a screen of the touchscreen to obtain a second interface when it is detected that the touchscreen of the terminal is in the inclined state, wherein the second interface is an interface obtained according to the movement of the part or all of the first interface; and
receiving an operation performed by the user on the second interface, and after the user completes the operation on the second interface, restoring the moved part or all of the first interface to a position prior to the movement;
wherein the part of the first interface is a part or all of operable interface content on the first interface, wherein the operable interface content comprises at least one of an input window and/or a virtual keyboard.

2. The method according to claim 1, wherein the second interface is specifically an interface obtained after the part or all of the first interface is moved.

3. The method according to claim 1 or 2, wherein the inclined state of the touchscreen is inclined leftward, inclined rightward, inclined upward, inclined downward, inclined upward-leftward, inclined downward-leftward, inclined upward-rightward, or inclined downward-rightward.

4. A terminal, wherein the terminal comprises:
a touchscreen, configured to present an interface on a screen of the touchscreen;
a sensor, configured to detect whether the touchscreen is in an inclined state, wherein the being in an inclined state comprises having an inclined angle in a preset range in a preset direction, or having acceleration or displacement in a preset range in a preset direction; and
a processor, configured to move, based on a predefined rule according to the inclined state of the touchscreen, a part or all of a first interface that is currently displayed to a user and is on a screen of the touchscreen to obtain a second interface when the sensor detects that the touchscreen of the terminal is in the inclined state, wherein the second interface is an interface obtained according to the movement of the part or all of the first interface; and
the processor is further configured to receive an operation performed by the user on the second interface, and after the user completes the operation on the second interface, restore the moved part or all of the first interface to a position prior to the movement;
wherein the part of the first interface is a part or all of operable interface content on the first interface, wherein the operable interface content comprises at least one of an input window and/or a virtual keyboard.

5. The terminal according to claim 4, wherein the second interface is specifically an interface obtained after the part or all of the first interface is moved.

6. The terminal according to claim 4 or 5, wherein the inclined state of the touchscreen is inclined leftward, inclined rightward, inclined upward, inclined downward, inclined upward-leftward, inclined downward-leftward, inclined upward-rightward, or inclined downward-rightward.
